# EUROPEAN PATENT SPECIFICATION

(11) **EP 3 936 698 B1**
(45) Date of publication and mention of the grant of the patent: **07.02.2024**
(21) Application number: 20425023.7
(22) Date of filing: 06.07.2020
(51) Int. Cl.: F01D 5/18, F01D 5/00, B23P 6/00, B23P 6/04

(54) **METHOD FOR RECONDITIONING A TIP OF A BLADE OF A GAS TURBINE PLANT**
VERFAHREN ZUR REKONDITIONIERUNG EINER SCHAUFELSPITZE EINER GASTURBINENANLAGE
PROCÉDÉ DE RECONDITIONNEMENT D'UNE POINTE D'UNE PALE D'UNE CENTRALE À TURBINE À GAZ

(43) Date of publication of application: 12.01.2022
(73) Proprietor: ANSALDO ENERGIA S.p.A., 16152 Genova (IT)
(72) Inventor: Gabrielli, Alessio, 16152 Genova (IT); Fignino, Federico, 16152 Genova (IT); Mela, Elisa, 16152 Genova (IT); Tipa, Dario, 16152 Genova (IT)
(74) Representative: Studio Torta S.p.A.

(56) References cited:
- WO-A1-2019/212533
- US-A1- 2013 298 400
- US-A1- 2015 184 514
- US-B2- 6 595 749

## Description

### TECHNICAL FIELD

The invention relates to a method for reconditioning a tip of a blade of a gas turbine plant.

### BACKGROUND

As is known, a gas turbine power plant comprises a compressor, a combustor and a turbine.

In particular, the compressor comprises an inlet supplied with air and a plurality of rotating blades compressing the passing air. The compressed air leaving the compressor flows into a plenum, i.e. a closed volume delimited by an outer casing, and from there into the combustor.

Inside the combustor, the compressed air is mixed with at least one fuel and combusted. The resulting hot gas leaves the combustor and expands in the turbine. In the turbine the hot gas expansion moves rotating blades connected to a rotor, performing work.

Both the compressor and the turbine comprise a plurality of stator assemblies axially interposed between rotor assemblies.

Each rotor assembly comprises a rotor disk rotating about a main axis and a plurality of blades supported by the rotor disk.

During the operation of the power plants, the blades of the turbine are constantly exposed to a hot gas flow coming from the combustor.

Particularly exposed to the hot gases is the tip region of the blades. A leakage flow of hot gases, in fact, is normally present at the tip of the blades.

To reduce said leakage, the tip of the blade is provided with a rim shaped so as to create a recessed tip, also known as a squealer tip.

By using said squealer tip, the gap between the tip and the casing is reduced avoiding the risk of catastrophic failure should the tip rub against the casing during turbine operation.

Despite the reduction of the leakage flow, the tip region of the blade is still subjected to high stresses.

In the tip region are also arranged openings inevitably created by the casting process in order to obtain an internal cooling path. These casting openings, in fact, are needed for sustaining the ceramic core during the casting process. These casting opening remains after the removal of the ceramic cores by chemical leach/etching process.

Said casting openings are normally closed by brazed closing elements, often called "letterboxes".

In use, these brazed closing elements are subjected to repeated stresses and heavily damaged by TMF (Thermo Mechanical Fatigue) cracks and oxidation.

The result is that, after a period of use, these brazed closing elements covering the opening are heavily consumed.

If the brazed closing elements are damaged, the blade cooling would not be efficient anymore as the cooling fluid can flow through the casting openings.

During maintenance operations, known methods for reconditioning the tip of the blade are performed. However, said techniques involve a restoration of the original design by replacing the damaged closing elements (letterboxes) with new ones. However, these techniques have a high fall-out rate. Examples of reconditioning methods are disclosed in US2015/184514 and WO2019/2102533.

### SUMMARY

Hence, it is an object of the present invention to provide a method for reconditioning the blade tip, which is reliable and, at the same time, simple, economic and rapid.

In accordance with these objects, the invention relates to a method for reconditioning a blade of a gas turbine plant; the blade comprising an airfoil extending along a span wise direction from a base to a tip; the airfoil comprising an outer wall defining a leading edge, a trailing edge, a pressure side and a suction side; the airfoil enclosing at least one cooling duct extending along the span wise direction and fed, in use, with a cooling fluid; the tip being provided with a tip wall and with a rim following, at least in part, the tip cross sectional profile; the tip wall being provided with at least one first casting opening and the outer wall being provided with at least one first service opening arranged close to the respective first casting opening; the first casting opening and the first service opening being closed with a first closing element;
the method comprising the step of
- removing at least one first portion of the rim in the proximity of the first casting opening and the first service opening;
- removing at least one first portion of the tip wall comprising the at least one first casting opening and at least one portion of the outer wall comprising the at least one first service opening;
- rebuilding the at least one first portion of the outer wall removed without the at least one first service opening;

- rebuilding the at least one first portion of the tip wall removed without the at least one first casting opening;
- rebuilding the at least one first portion of the rim removed.

### BRIEF DESCRIPTION OF THE DRAWINGS

The invention will now be described with reference to the accompanying drawings, which show a non-limiting embodiment thereof, wherein:
- Figure 1 is a schematic representation, with parts removed for clarity and parts in section, of a gas turbine plant comprising a blade to be reconditioned according to the method of the present invention;
- Figure 2 is a schematic perspective view, with parts removed for clarity, of a blade to be reconditioned according to the method of the present invention;
- figure 3 is a schematic perspective view, with parts removed for clarity, of a first detail of the blade to be reconditioned according to the method of the present invention;
- figures 4-18 are schematic perspective views, with parts removed for clarity, of the first detail of the blade to be reconditioned during the different steps of the method according to the present invention.

### DETAILED DESCRIPTION OF EXEMPLARY EMBODIMENTS

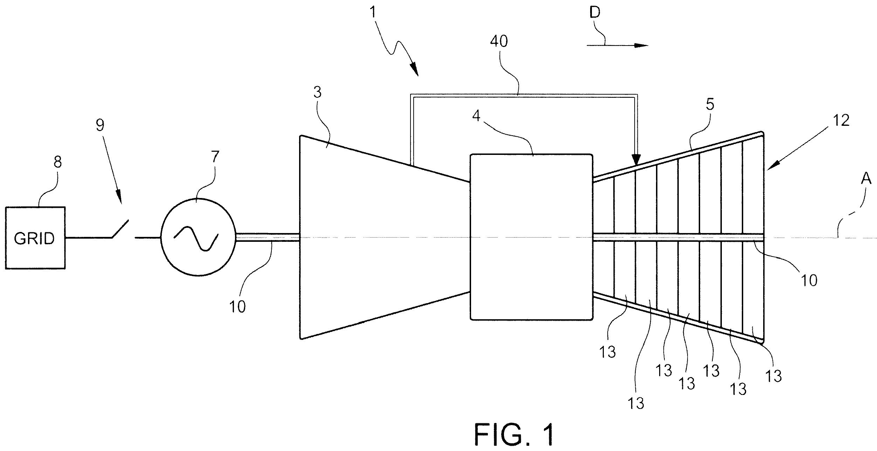

In figure 1, reference numeral 1 indicates a gas turbine plant for electrical energy production comprising a compressor 3, a combustor 4, a gas turbine 5 and a generator 7, which transforms the mechanical power supplied by turbine 5 into electrical power to be supplied to an electrical grid 8, connected to the generator 7 via a switch 9.

A variant not shown provides for plant 1 to be of the combined cycle type and including, in addition to the gas turbine 5 and generator 7, also a steam turbine.

The gas turbine 5 extends along a longitudinal axis A and is provided with a shaft 10 (also extending along axis A) to which compressor 3 and generator 7 are also connected.

Gas turbine 5 comprises an expansion channel 12 wherein the hot gas working fluid coming from the combustor 4 flows in a direction D.

The expansion channel 12 has a section, which radially increases along the axis A in the direction D.

In the expansion channel 12, a plurality of stages 13 spaced along the longitudinal axis A is arranged. Each stage 13 comprises a row of fixed blades and a row of rotating blades (not illustrated in figure 1). Each row comprises circumferentially spaced blades extending radially outwardly from a respective supporting disc.

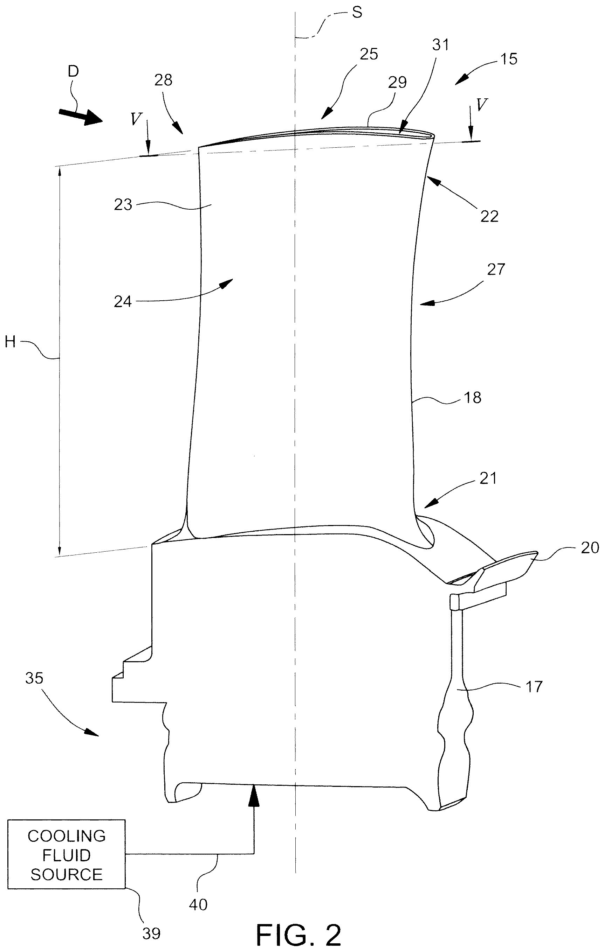

In figure 2 a rotating blade 15 of a stage 13 of the gas turbine 5 is represented.

The blade 15 comprises a root 17, an airfoil 18 and a platform 20.

The root 17 is configured to be coupled to a supporting disc (not illustrated in the accompanying figures) of the gas turbine 5. In particular, the disc has a plurality of axial seats, which are circumferentially spaced and engaged by respective roots 17 of the rotating blades 15.

The airfoil 18 extends along a span wise direction S from the root 17 and is provided with a base 21 coupled to the root 17 and a tip 22 which is opposite to the base 21 along the span wise direction S.

In use, when the blade 15 is coupled to the supporting disc, the span wise direction S is substantially radially arranged with respect to the axis A of the gas turbine 5.

The airfoil 18 is completely housed in the expansion channel 12 and defines the aerodynamic profile of the rotating blade 15.

The airfoil 18 comprises an outer wall 23, which defines externally a concave pressure side 24, a convex suction side 25, a leading edge 27 and a trailing edge 28.

In use, the pressure side 24 and the suction side 25 extend axially between the leading edge 27 and the trailing edge 28 and radially between the base 21 and the tip 22.

In use, the leading edge 27 is arranged upstream of the trailing edge 28 along the direction D of the hot working fluid in the expansion channel 12.

The platform 20 is arranged between the root 17 and the airfoil 18.

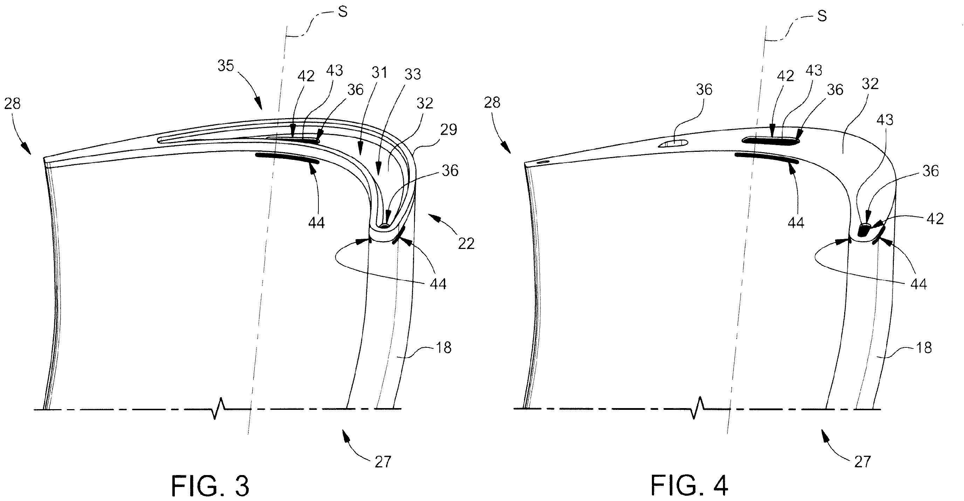

With reference to figures 3, the blade 15 comprises a rim 29 at the tip 22.

The rim 29 protrudes from the tip 22 and follows the tip cross sectional profile. With the expression "cross sectional profile" is intended the profile of the airfoil 18 obtained by crossing the airfoil 18 at the tip 22 with a plane perpendicular to the span wise direction S.

In this way, the rim 29 defines a recessed tip, also known as "squealer tip".

In particular, the rim 29 defines a tip cavity 31 having a bottom, which is defined by a tip wall 32, defining an outer tip surface 33.

Preferably, the rim 29 is made integral with the tip 22.

With reference to figure 2 and 3, blade 15 is provided with a cooling system 35.

The cooling system 35 comprises a plurality of feeding channels (not shown) made in the root 17, at least one cooling duct 36 (partially visible in figure 3) made in the airfoil 18 and fed with the cooling fluid coming from the feeding channels in the root 17.

In the non-limiting example here disclosed and illustrated, the cooling system 35 comprises at least three cooling ducts 36 (better visible in figure 4), one at the leading edge 27, one at the trailing edge 28 and one in an intermediate position between the leading edge 27 and the trailing edge 28.

The feeding channels are supplied with a cooling fluid coming from a cooling fluid source 39. Preferably, the cooling fluid source 39 is a portion of the compressor 3.

In figure 1 a suction line 40 dedicated to the suction of cooling air from the compressor 3 and connected to the gas turbine 5 is shown.

The blade 15 is made by casting process. To obtain the cooling ducts 36 the process needs casting openings 42 on the tip wall 32(represented with dotted lines in figures 3 and 4). These casting openings 42 are needed for sustain the ceramic core during the casting process. These casting openings 42 remains after the removal of the ceramic cores by chemical leach/etching process.

In the non-limiting example here disclosed and illustrated the casting openings 42 are two: one "front" casting opening 42 arranged at the leading edge 27 and one "rear" casting opening 42 arranged in an intermediate position between the leading edge 27 and the trailing edge 28.

Referring to the figure 3, said casting openings 42 are closed by respective closing elements 43 (represented in grey), often called "letterboxes".

For fixing said closing element 43, during the manufacturing process, at least one service opening 44 is made on the suction side 25 and/or on the pressure side 24 at the tip 22 substantially in the proximity of the respective casting opening 42.

In the non-limiting example here disclosed and illustrated, the service openings 44 are two: one on the suction side 25 and one on the pressure side 24.

In particular, the service openings 44 are obtained by electro-discharge machining and are shaped to allow the insertion of the respective closing element 43.

Each closing element 43 is shaped so as to close, at the same time, also the respective service openings 44.

After the insertion, the closing element 43 is brazed for closing, in a reliable way, the respective casting opening 42 and the respective service openings 44.

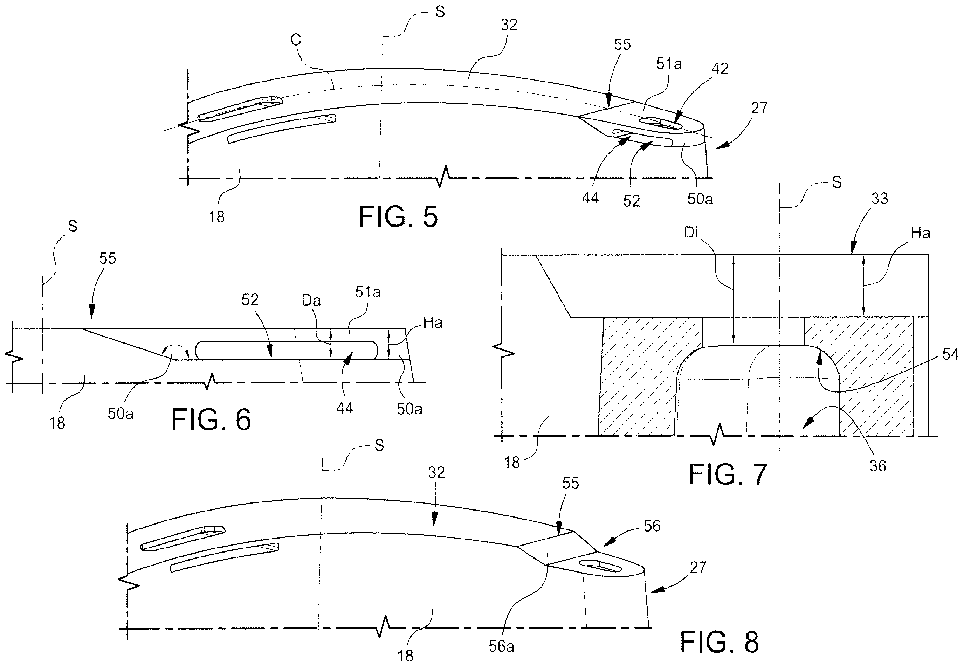

As visible from figures 4 and 5, casting openings 42 and service openings 44 are in communication with a respective cooling duct 36.

Closing elements 43 are preferably made of a material different from the one used for the outer wall 23 and less resistant.

In other words, the blade 15 comprises a front closing element 43 for closing the "front" casting opening 42 at the leading edge 27 and a rear closing element 43 for closing the "rear" casting opening 42 arranged in an intermediate position between the leading edge 27 and the trailing edge 28.

Figure 4-18 shows different steps of the method for reconditioning a tip 22 of a blade 15 of a gas turbine plant 1 according to the present invention.

Blade 15 shown in figures 2 and 3 is an existing operating blade, which needs a reconditioning of the tip 22.

After a period of use, in fact, the closing elements 43 closing the casting openings 42 and the service openings 44 are heavily consumed.

If these closing elements 43 are damaged, the cooling of the blade 15 is not efficient anymore as the cooling fluid can flow through the casting openings 42 and/or the service openings 44.

The method for reconditioning the tip of the blade 15 according to the present invention is able to recover the blade in order to let it is used again in the turbine 5 for a new period of time.

Therefore, the method for reconditioning the tip 22 of the blade 15 according to the present invention can be used for recovering existing blades 15 wherein at least one of the closing elements 43 is damaged or need to be replaced as going to break shortly.

The method firstly involves removing at least one portion of the rim 29.

The method comprises removing at least the portion of the rim 29 arranged substantially in correspondence of the closing elements 43 needing an intervention (e.g. damaged or about to break). In other words, the method comprises removing at least the portion of the rim 29 arranged downstream the closing elements 43 that need an intervention (i.e. damaged) along the span wise direction S from the base 21 to the tip 22.

In the non-limiting example here disclosed and illustrated, the rim 29 is preferably completely removed as illustrated clearly in figure 4.

The removal of the rim 29 is preferably made by an electrical discharge machining process (EDM).

After the removal of at least one portion of the rim 29, the method involves removing at least one portion 50 of the outer wall 23 and at least one portion of the tip wall 32 in the proximity of the closing element 43 needing an intervention In the non-limiting example here disclosed and illustrated both the front closing element 43 and the rear closing element 43 need an intervention.

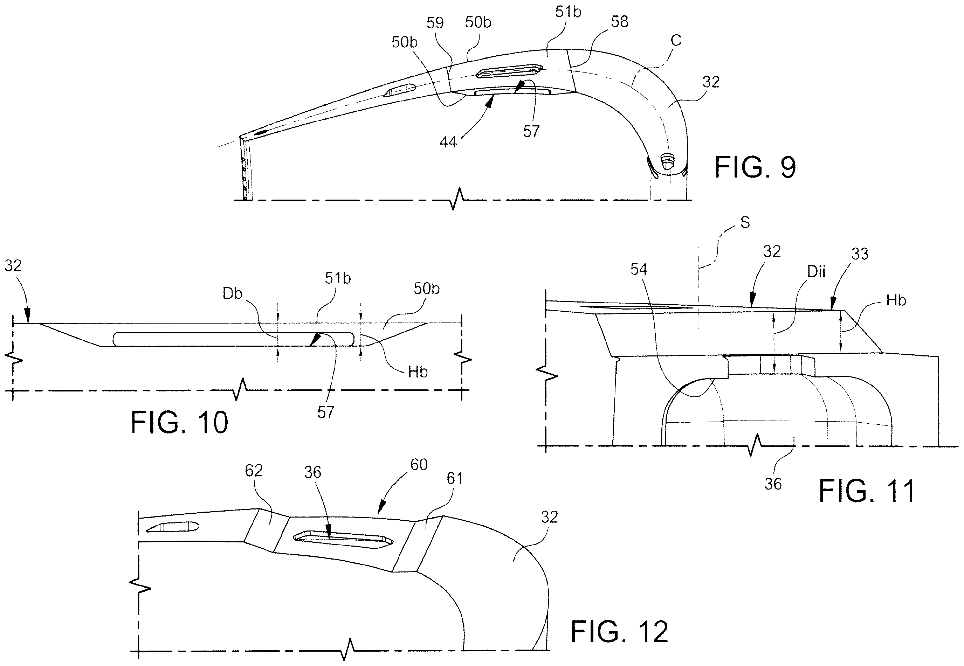

Therefore, the method comprises removing a portion 50a of the outer wall 23 and a portion 51a of the tip wall 32 at the leading edge 27 (see figures 5-8) and removing a portion 50b of the outer wall 23 and a portion 51b of the tip wall 32 in an intermediate position between the leading edge 27 and the trailing edge 28 (see figures 9-12).

As detailed in figure 5 and 6 the removed portion 50a of the outer wall 23 has a height Ha (measured along the span wise direction S) at least equal to the distance Da measured along the span wise direction S) between the outer surface 33 of the tip wall 32 and the wall 52 of the service opening 44 closer to the base 21 of the blade 15.

More preferably, as detailed in figure 7, the height Ha is smaller than the distance Di (measured along the span wise direction S) between the outer surface 33 of the tip wall 32 and the inner wall 54 of the respective cooling duct 36.

In the non-limiting example here disclosed and illustrated the height Ha is equal to the distance Da between the outer surface 33 of the tip wall 32 and the wall 52 of the service opening 44 closer to the base 21 of the blade 15.

Preferably, the removed portion 50a of the outer wall 23 and the removed portion 51a of the tip wall 32 at the leading edge 27 extends along the camber line C from the leading edge 27 to an end section 55. At the end section 55 the removed portion 50a of the outer wall 23 and the removed portion 51a of the tip wall 32 are wedge-shaped.

The removal of the portion 50a of the outer wall 23 and the portion 51a of the tip wall 32 is preferably made by an electrical discharge machining process (EDM).

As illustrated in figure 8, at the end of the removal of the portion 50a of the outer wall 23 and the portion 51a of the tip wall 32, a recess 56 is present at the leading edge 27. The recess 56 has a chamfered portion 56a.

As detailed in figure 9 and 10 the removed portion 50b of the outer wall 23 has a height Hb (measured along the span wise direction S) at least equal to the distance Db (measured along the span wise direction S) between the outer surface 33 of the tip wall 32 and the wall 57 of the service opening 44 closer to the base 21 of the blade 15.

More preferably, as detailed in figure 11, the height Hb is smaller than the distance Dii (measured along the span wise direction S) between the outer surface 33 of the tip wall 32 and the inner wall 54 of the respective cooling duct 36.

In the non-limiting example here disclosed and illustrated the height Hb is equal to the distance Db between the tip wall 32 and the wall 57 of the service opening 44 closer to the base 21 of the blade 15.

Preferably, the removed portion 50b of the outer wall 23 and the removed portion 51b of the tip wall 32 extends along the camber line C from a first section 58 comprised between the leading edge 27 and the respective casting opening 45 to a second section 59 comprised between the trailing edge 28 and the respective casting opening 42. At the first section 58 and at the second section 59 the removed portion 50b of the outer wall 23 and the removed portion 51b of the tip wall 32 are preferably wedge-shaped.

The removal of the portion 50b of the outer wall 23 and the portion 51b of the tip wall 32 is preferably made by an electrical discharge machining process (EDM).

As illustrated in figure 12, at the end of the removal of the portion 50b of the outer wall 23 and the portion 51b of the tip wall 32, a recess 60 is present in an intermediate position between the leading edge 27 and the trailing edge 28. The recess 60 has two chamfered portions 61 and 62.

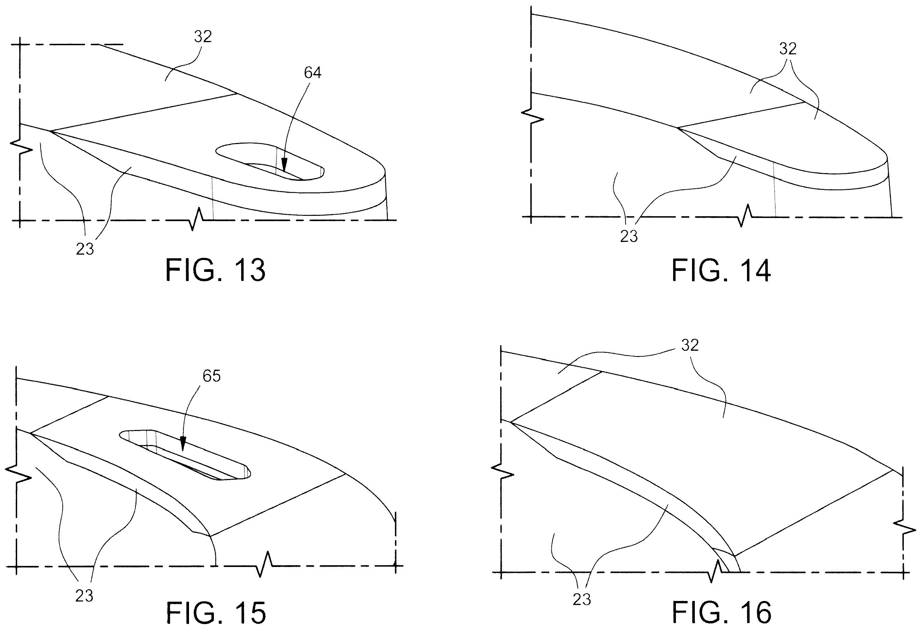

After the removal of the portions. 50a and/or 50b of the outer wall 23 and of the portion 51a and/or 51b of the tip wall 32, the method involves rebuilding the outer wall 23 and the tip wall 32 with an additive manufacturing technique (see figures 13 and 15) and with an arc welding process (see figures 14 and 16).

In other words, the rebuilding of the outer wall 23 with the additive manufacturing technique leaves an opening 64 at the leading edge and an opening 65 in the intermediate position between the leading edge 27 and the trailing edge 28. These openings 64, 65 substantially coincides with the casting openings 42 in communication with the cooling duct 36.

According to the method of the present invention, said openings 64 65 are closed by rebuilding the tip wall 32 with an arc welding process.

In this way, at the end of the method, casting openings 42 and service openings 44 are no longer present and consequently respective closing elements 43 are no more needed. Advantageously, this method is able to eliminate some of the weak points of the blade 15 (the closing elements 43).

Preferably, the outer wall 23 is rebuilt using a high strength oxidation material.

The preferred additive technique is the Laser Metal Deposition process.

The tip wall 32 openings 64 65 are preferably closed using a tungsten inert gas welding process (TIG).

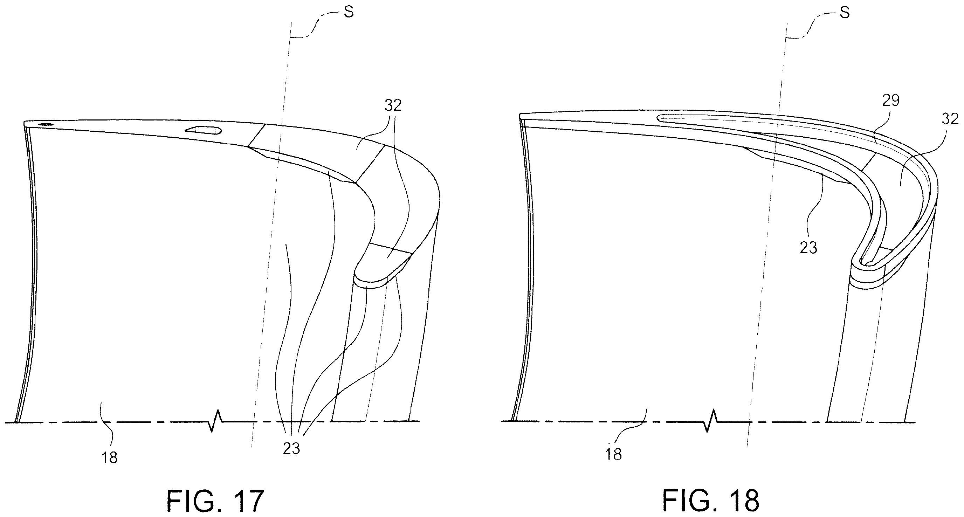

In figure 17 the blade 15 is represented at the end of the rebuilding of the outer wall 23 and the rebuilding the tip wall 32.

Finally, referring to figure 18, the method involves rebuilding the rim 29, preferably by an additive manufacturing technique, for example the same Laser Metal Deposition process used for the outer wall 32 with the same material.

Finally, it is clear that the method described herein can be subject to changes and variations, without for this reason going beyond the scope of protection of the appended claims.

## Claims

1. Method for reconditioning a blade (15) of a gas turbine plant (1); the blade (15) comprising an airfoil (18) extending along a span wise direction (S) from a base (21) to a tip (22); the airfoil (18) comprising an outer wall (23) defining a leading edge (27), a trailing edge (28), a pressure side (24) and a suction side (25); the airfoil (18) enclosing at least one cooling duct (36) extending along the span wise direction (S) and fed, in use, with a cooling fluid; the tip (22) being provided with a tip wall (32) and with a rim (29) following, at least in part, the tip cross sectional profile; the tip wall (32) being provided with at least one first casting opening (42) and the outer wall (23) being provided with at least one first service opening (44) arranged close to the respective first casting opening (42); the first casting opening (42) and the first service opening (44) being closed with a first closing element (43);
the method comprising the step of
• removing at least one first portion of the rim (29) in the proximity of the first casting opening (42) and the first service opening (44);
• removing at least one first portion (51a, 51b) of the tip wall (32) comprising the at least one first casting opening (42) and at least one portion (50a, 50b) of the outer wall (23) comprising the at least one first service opening (44);
• rebuilding the at least one first portion (50a, 50b) of the outer wall (23) removed without the at least one first service opening (44);
• rebuilding the at least one first portion (51a, 51b) of the tip wall (32) removed without the at least one first casting opening (42);
• rebuilding the at least one first portion of the rim (29) removed.

2. Method according to claim 1, wherein the step of rebuilding the at least one first portion (50a, 50b) of the outer wall (23) removed is made with an additive manufacturing technique.

3. Method according to claim 2, the step of rebuilding the at least one first portion (50a, 50b) of the outer wall (23) removed is made using a high strength oxidation material.

4. Method according to anyone of the foregoing claims, wherein the step of rebuilding the at least one first portion (51a, 51b) of the tip wall (32) is made using an additive manufacturing technique and an arc welding process.

5. Method according to claim 4, wherein the step of rebuilding the at least one first portion (51a, 51b) of the tip wall (32) comprises using an additive manufacturing technique and using an arc welding process for closing at least one opening (64; 65) left by the additive manufacturing.

6. Method according to claim 4 o 5, wherein the arc welding process is a tungsten inert gas welding process (TIG) .

7. Method according to anyone of the foregoing claims, wherein the step of rebuilding the at least one first portion of the rim (29) removed is made with an additive manufacturing technique.

8. Method according to anyone of the claims from 2 to 7, wherein the additive manufacturing technique is a Laser Metal Deposition process.

9. Method according to anyone of the foregoing claim, wherein the step of removing at least one first portion of the rim (29) is made by an electrical discharge machining process (EDM).

10. Method according to anyone of the foregoing claims, wherein the steps of removing the at least one first portion (51a, 51b) of the tip wall (32) comprising the at least one first casting opening (42) and at least one first portion (50a, 50b) of the outer wall (23) comprising the at least one first service opening (44) are performed by an electrical discharge machining process (EDM).

11. Method according to anyone of the foregoing claims, wherein the at least one first portion (50a, 50b) of the outer wall (23) removed has a height (Ha, Hb) at least equal to the distance (Da, Db) between the outer surface (33) of the tip wall (32) and a wall (52) of the service opening (44) closer to the base (21) of the blade (15) .

12. Method according to claim 11, wherein the at least one first portion (50a, 50b) of the outer wall (23) removed has a height (Ha, Hb) smaller than the distance (Di, Dii) between the outer surface (33) of the tip wall (32) and the inner wall (54) of the respective cooling duct (36) .

13. Method according to anyone of the foregoing claims, wherein the at least one first portion (51a, 51b) of the tip wall (32) removed and the at least one first portion (50a, 50b) of the outer wall (23) removed have at least one wedge-shaped profile.

14. Method according to anyone of the foregoing claims, wherein the tip wall (32) is provided with at least one second casting opening (42) and the outer wall (23) being provided with at least one second service opening (44) arranged close to the respective second casting opening (42); the second casting opening (42) and the second service opening (44) being closed by a second closing element (43); the first casting opening (42) and the first service opening (44) being arranged at the leading edge (27); the second casting opening (42) and the second service opening (44) being arranged at an intermediate position between the leading edge (27) and the trailing edge (28); the method comprising:
- removing at least one second portion of the rim (29) in the proximity of the second casting opening (42) and the second service opening (44);
- removing at least one second portion (51b) of the tip wall (32) comprising the at least one second casting opening (42) and at least one portion (50b) of the outer wall (23) comprising the at least one second service opening (44);
- rebuilding the at least one second portion (50b) of the outer wall (23) removed without the at least one second service opening (44);
- rebuilding the at least one second portion (51b) of the tip wall (32) removed without the at least one second casting opening (42);
- rebuilding the at least one second portion of the rim (29) removed.

15. Method according to anyone of the foregoing claims, comprising removing completely the rim (29) before removing at least one portion (51a, 51b) of the tip wall (32) .

## Patentansprüche

1. Verfahren zum Wiederaufbereiten einer Schaufel (15) einer Gasturbinenanlage (1); wobei die Schaufel (15) ein Schaufelprofil (18) umfasst, das sich entlang einer Blattlängenrichtung (S) von einer Basis (21) zu einer Spitze (22) erstreckt; wobei das Schaufelprofil (18) eine Außenwand (23) umfasst, die eine Vorderkante (27), eine Hinterkante (28), eine Druckseite (24) und eine Saugseite (25) definiert; wobei das Schaufelprofil (18) mindestens einen Kühlkanal (36) einschließt, der sich entlang der Blattlängenrichtung (S) erstreckt und in der Verwendung mit einem Kühlfluid gespeist wird; wobei die Spitze (22) mit einer Spitzenwand (32) und mit einem Rand (29) ausgestattet ist, der mindestens teilweise dem Spitzen-Querschnittsprofil folgt; wobei die Spitzenwand (32) mit mindestens einer ersten Gussöffnung (42) ausgestattet ist und die Außenwand (23) mit mindestens einer ersten Wartungsöffnung (44) ausgestattet ist, die in der Nähe der entsprechenden ersten Gussöffnung (42) angeordnet ist; wobei die erste Gussöffnung (42) und die erste Wartungsöffnung (44) mit einem ersten Verschlusselement (43) verschlossen sind;
wobei das Verfahren die folgenden Schritte aufweist:
• Entfernen mindestens eines ersten Teils des Rands (29) in der Nähe der ersten Gussöffnung (42) und der ersten Wartungsöffnung (44);
• Entfernen mindestens eines ersten Teils (51a, 51b) der Spitzenwand (32), der die mindestens eine erste Gussöffnung (42) umfasst, und mindestens eines Teils (50a, 50b) der Außenwand (23), der die mindestens eine Wartungsöffnung (44) umfasst;
• Wiederaufbauen des entfernten mindestens einen ersten Teils (50a, 50b) der Außenwand (23) ohne die mindestens eine erste Wartungsöffnung (44);
• Wiederaufbauen des entfernten mindestens einen ersten Teils (51a, 51b) der Spitzenwand (32) ohne die mindestens eine erste Gussöffnung (42);
• Wiederaufbauen des entfernten mindestens einen ersten Teils des Rands (29).

2. Verfahren gemäß Anspruch 1, wobei der Schritt des Wiederaufbauens des entfernten mindestens einen ersten Teils (50a, 50b) der Außenwand (23) mittels eines additiven Fertigungsverfahrens erfolgt.

3. Verfahren gemäß Anspruch 2, wobei der Schritt des Wiederaufbauens des entfernten mindestens einen ersten Teils (50a, 50b) der Außenwand (23) unter der Verwendung eines hochfesten Oxidationsmaterials erfolgt.

4. Verfahren gemäß einem der vorhergehenden Ansprüche, wobei der Schritt des Wiederaufbauens des mindestens einen ersten Teils (51a, 51b) der Spitzenwand (32) unter der Verwendung eines additiven Fertigungsverfahrens und eines Lichtbogenschweißverfahrens erfolgt.

5. Verfahren gemäß Anspruch 4, wobei der Schritt des Wiederaufbauens des mindestens einen ersten Teils (51a, 51b) der Spitzenwand (32) die Verwendung eines additiven Fertigungsverfahrens und die Verwendung eines Lichtbogenschweißverfahrens zum Schließen mindestens einer Öffnung (64; 65) umfasst, die durch die additive Fertigung verbleibt.

6. Verfahren gemäß Anspruch 4 oder 5, wobei das Lichtbogenschweißverfahren ein Wolfram-Inertgas-Schweiß-Prozess (WIG) ist.

7. Verfahren gemäß einem der vorhergehenden Ansprüche, wobei der Schritt des Wiederaufbauens des entfernten mindestens einen ersten Teils des Rands (29) unter der Verwendung eines additiven Fertigungsverfahrens erfolgt.

8. Verfahren gemäß einem der Ansprüche 2 bis 7, wobei das additive Fertigungsverfahren ein Laserauftragsschweiß-Prozess ist.

9. Verfahren gemäß einem der vorhergehenden Ansprüche, wobei der Schritt des Entfernens mindestens eines ersten Teils des Rands (29) unter der Verwendung eines Elektroerosionsbearbeitungs-Prozesses (EDM) erfolgt.

10. Verfahren gemäß einem der vorhergehenden Ansprüche, wobei die Schritte des Entfernens des mindestens einen ersten Teils (51a, 51b) der Spitzenwand (32), der die mindestens eine erste Gussöffnung (42) umfasst, und des mindestens einen ersten Teils (50a, 50b) der Außenwand (23), der die mindestens eine erste Wartungsöffnung (44) umfasst, unter der Verwendung eines Elektroerosionsbearbeitungs-Prozesses (EDM) erfolgen.

11. Verfahren gemäß einem der vorhergehenden Ansprüche, wobei der entfernte mindestens eine erste Teil (50a, 50b) der Außenwand (23) eine Höhe (Ha, Hb) hat, die mindestens gleich der Entfernung (Da, Db) zwischen der Außenoberfläche (33) der Spitzenwand (32) und einer Wand (52) der Wartungsöffnung (44) ist, die der Basis (21) der Schaufel (15) näher liegt.

12. Verfahren gemäß Anspruch 11, wobei der entfernte mindestens eine erste Teil (50a, 50b) der Außenwand (23) eine Höhe (Ha, Hb) hat, die kleiner als die Entfernung (Di, Dii) zwischen der Außenoberfläche (33) der Spitzenwand (32) und der Innenwand (54) des entsprechenden Kühlkanals (36) ist.

13. Verfahren gemäß einem der vorhergehenden Ansprüche, wobei der entfernte mindestens eine erste Teil (51a, 51b) der Spitzenwand (32) und der entfernte mindestens eine erste Teil (50a, 50b) der Außenwand (23) mindestens ein keilförmiges Profil haben.

14. Verfahren gemäß einem der vorhergehenden Ansprüche, wobei die Spitzenwand (32) mit mindestens einer zweiten Gussöffnung (42) ausgestattet ist und die Außenwand (23) mit mindestens einer zweiten Wartungsöffnung (44) ausgestattet ist, die in der Nähe der entsprechenden Gussöffnung (42) angeordnet ist; wobei die zweite Gussöffnung (42) und die zweite Wartungsöffnung (44) durch ein zweites Verschlusselement (43) verschlossen sind; wobei die erste Gussöffnung (42) und die erste Wartungsöffnung (44) an der Vorderkante (27) angeordnet sind; wobei die zweite Gussöffnung (42) und die zweite Wartungsöffnung (44) an einer Zwischenposition zwischen der Vorderkante (27) und der Hinterkante (28) angeordnet sind; wobei das Verfahren umfasst:
- Entfernen mindestens eines zweiten Teils des Rands (29) in der Nähe der zweiten Gussöffnung (42) und der zweiten Wartungsöffnung (44);
- Entfernen mindestens eines zweiten Teils (51b) der Spitzenwand (32), der die mindestens eine zweite Gussöffnung (42) umfasst, und mindestens eines Teils (50b) der Außenwand (23), der die mindestens eine zweite Wartungsöffnung (44) umfasst;
- Wiederaufbauen des entfernten mindestens einen zweiten Teils (50b) der Außenwand (23) ohne die mindestens eine zweite Wartungsöffnung (44);
- Wiederaufbauen des entfernten mindestens einen zweiten Teils (51b) der Spitzenwand (32) ohne die mindestens eine zweite Gussöffnung (42);
- Wiederaufbauen des entfernten mindestens einen zweiten Teils des Rands (29).

15. Verfahren gemäß einem der vorhergehenden Ansprüche, umfassend vollständiges Entfernen des Rands (29) vor dem Entfernen mindestens eines Teils (51a, 51b) der Spitzenwand (32).

## Revendications

1. Procédé de reconditionnement d'une pale (15) d'une centrale à turbine à gaz (1) ; la pale (15) comprenant un profil aérodynamique (18) s'étendant le long d'une direction d'envergure (S) depuis une base (21) jusqu'à une pointe (22) ; le profil aérodynamique (18) comprenant une paroi extérieure (23) définissant un bord d'attaque (27), un bord de fuite (28), un côté de pression (24) et un côté d'aspiration (25) ; le profil aérodynamique (18) entourant au moins un conduit de refroidissement (36) s'étendant le long de la direction d'envergure (S) et alimenté, en utilisation, en fluide de refroidissement ; la pointe (22) étant pourvue d'une paroi de pointe (32) et d'un rebord (29) suivant, au moins en partie, le profil de section transversale de la pointe ; la paroi de pointe (32) étant pourvue d'au moins une première ouverture de coulée (42) et la paroi extérieure (23) étant pourvue d'au moins une première ouverture de service (44) agencée à proximité de la première ouverture de coulée respective (42) ; la première ouverture de coulée (42) et la première ouverture de service (44) étant fermées à l'aide d'un premier élément de fermeture (43) ;
le procédé comprenant les étapes consistant à
• retirer au moins une première partie du rebord (29) à proximité de la première ouverture de coulée (42) et de la première ouverture de service (44) ;
• retirer au moins une première partie (51a, 51b) de la paroi de pointe (32) comprenant la au moins une première ouverture de coulée (42) et au moins une partie (50a, 50b) de la paroi extérieure (23) comprenant la au moins une première ouverture de service (44) ;
• reconstruire la au moins une première partie (50a, 50b) de la paroi extérieure (23) retirée sans la au moins une première ouverture de service (44) ;
• reconstruire la au moins une première partie (51a, 51b) de la paroi de pointe (32) retirée sans la au moins une première ouverture de coulée (42) ;
• reconstruire la au moins une première partie du rebord (29) retirée.

2. Procédé selon la revendication 1, dans lequel l'étape de reconstruction de la au moins une première partie (50a, 50b) de la paroi extérieure (23) retirée est réalisée avec une technique de fabrication additive.

3. Procédé selon la revendication 2, l'étape de reconstruction de la au moins une première partie (50a, 50b) de la paroi extérieure (23) retirée étant réalisée en utilisant un matériau d'oxydation à haute résistance.

4. Procédé selon l'une quelconque des revendications précédentes, dans lequel l'étape de reconstruction de la au moins une première partie (51a, 51b) de la paroi de pointe (32) est réalisée en utilisant une technique de fabrication additive et un processus de soudage à l'arc.

5. Procédé selon la revendication 4, dans lequel l'étape de reconstruction de la au moins une première partie (51a, 51b) de la paroi de pointe (32) comprend l'utilisation d'une technique de fabrication additive et l'utilisation d'un processus de soudage à l'arc pour fermer au moins une ouverture (64 ; 65) laissée par la fabrication additive.

6. Procédé selon la revendication 4 ou 5, dans lequel le processus de soudage à l'arc est un processus de soudage au gaz inerte au tungstène (TIG).

7. Procédé selon l'une quelconque des revendications précédentes, dans lequel l'étape de reconstruction de la au moins une première partie du rebord (29) retirée est réalisée avec une technique de fabrication additive.

8. Procédé selon l'une quelconque des revendications 2 à 7, dans lequel la technique de fabrication additive est un processus de dépôt de métal par laser.

9. Procédé selon l'une quelconque des revendications précédentes, dans lequel l'étape de retrait d'au moins une première partie du rebord (29) est réalisée par un processus d'usinage par décharge électrique (EDM).

10. Procédé selon l'une quelconque des revendications précédentes, dans lequel les étapes consistant à retirer la au moins une première partie (51a, 51b) de la paroi de pointe (32) comprenant la au moins une première ouverture de coulée (42) et au moins une première partie (50a, 50b) de la paroi extérieure (23) comprenant la au moins une première ouverture de service (44) sont effectuées par un processus d'usinage par électroérosion (EDM).

11. Procédé selon l'une quelconque des revendications précédentes, dans lequel la au moins une première partie (50a, 50b) de la paroi extérieure (23) retirée présente une hauteur (Ha, Hb) au moins égale à la distance (Da, Db) entre la surface extérieure (33) de la paroi de pointe (32) et une paroi (52) de l'ouverture de service (44) plus proche de la base (21) de la lame (15).

12. Procédé selon la revendication 11, dans lequel la au moins une première partie (50a, 50b) de la paroi extérieure (23) retirée présente une hauteur (Ha, Hb) inférieure à la distance (Da, Db) entre la surface extérieure (33) de la paroi de pointe (32) et la paroi intérieure (54) du conduit de refroidissement respectif (36).

13. Procédé selon l'une quelconque des revendications précédentes, dans lequel la au moins une première partie (51a, 51b) de la paroi de pointe (32) retirée et la au moins une première partie (50a, 50b) de la paroi extérieure (23) retirée présentent au moins un profil en forme de coin.

14. Procédé selon l'une quelconque des revendications précédentes, dans lequel la paroi de pointe (32) est pourvue d'au moins une seconde ouverture de coulée (42) et la paroi extérieure (23) est pourvue d'au moins une seconde ouverture de service (44) agencée à proximité de la seconde ouverture de coulée respective (42) ; la seconde ouverture de coulée (42) et la seconde ouverture de service (44) étant fermées par un second élément de fermeture (43) ; la première ouverture de coulée (42) et la première ouverture de service (44) étant agencées au niveau du bord d'attaque (27) ; la seconde ouverture de coulée (42) et la seconde ouverture de service (44) étant agencées dans une position intermédiaire entre le bord d'attaque (27) et le bord de fuite (28) ; le procédé comprenant les étapes consistant à :
• retirer au moins une seconde partie du rebord (29) à proximité de la seconde ouverture de coulée (42) et de la seconde ouverture de service (44) ;
• retirer au moins une seconde partie (51b) de la paroi de pointe (32) comprenant la au moins une seconde ouverture de coulée (42) et au moins une partie (50b) de la paroi extérieure (23) comprenant la au moins une seconde ouverture de service (44) ;
• reconstruire la au moins une seconde partie (50b) de la paroi extérieure (23) retirée sans la au moins une seconde ouverture de service (44) ;
• reconstruire la au moins une seconde partie (51b) de la paroi de pointe (32) retirée sans la au moins une seconde ouverture de coulée (42) ;
• reconstruire la au moins une seconde partie du rebord (29) retirée.

15. Procédé selon l'une quelconque des revendications précédentes, comprenant le retrait complet du rebord (29) avant le retrait d'au moins une partie (51a, 51b) de la paroi de pointe (32).
